# EUROPÄISCHE PATENTANMELDUNG

(11) **EP 2 672 139 A2**
(43) Veröffentlichungstag der Anmeldung: **11.12.2013**
(21) Anmeldenummer: 13166573.9
(22) Anmeldetag: 06.05.2013
(51) Int. Cl.: F16F 15/123, F16F 15/129

(54) **Torsionsschwingungsdämpferanordnung, insbesondere in einer Kupplungsscheibe**

(30) Priorität: 05.06.2012 DE 102012209472
(71) Anmelder: ZF Friedrichshafen AG, 88038 Friedrichshafen (DE)
(72) Erfinder: Handrik, Philipp, 02633 Göda (DE); Burkhardt, Martin, 99974 Mühlhausen (DE)

(57) **Zusammenfassung**

Eine Torsionsschwingungsdämpferanordnung, insbesondere in einer Kupplungsscheibe, umfasst einen in einem Bereich niedrigerer zu übertragender Drehmomente elastisch wirksamen ersten Dämpferbereich (16) mit einem ersten Eingangsbereich (24) und einem gegen die Wirkung einer ersten Dämpferelementenanordnung (38) um eine Drehachse (A) bezüglich des ersten Eingangsbereichs (24) drehbaren ersten Ausgangsbereich (28), einen im Bereich höherer zu übertragender Drehmomente elastisch wirksamen zweiten Dämpferbereich (18) mit einem zweiten Eingangsbereich (48) und einem gegen die Wirkung einer zweiten Dämpferelementenanordnung (58) um die Drehachse (A) bezüglich des zweiten Eingangsbereichs (48) drehbaren zweiten Ausgangsbereich (54), wobei der erste Dämpferbereich (16) eine erste Dämpferstufe (20) und eine zweite Dämpferstufe umfasst, wobei die erste Dämpferstufe (20) bis zu niedrigeren Drehmomenten elastisch wirksam ist, als die zweite Dämpferstufe, ferner umfassend eine Reibformation (120) zur Erzeugung einer Reibkraft wenigstens immer dann, wenn ein Eingangsbereich der ersten Dämpferstufe (20) sich bezüglich eines Ausgangsbereichs (30) der ersten Dämpferstufe (20) um die Drehachse (A) dreht und wenn ein Eingangsbereich der zweiten Dämpferstufe sich bezüglich eines Ausgangsbereichs der zweiten Dämpferstufe um die Drehachse (A) dreht.

## Beschreibung

Die vorliegende Erfindung betrifft eine Torsionsschwingungsdämpferanordnung, insbesondere in einer Kupplungsscheibe, umfassend einen in einem Bereich niedrigerer zu übertragender Drehmomente elastisch wirksamen ersten Dämpferbereich mit einem ersten Eingangsbereich und einem gegen die Wirkung einer ersten Dämpferelementenanordnung um eine Drehachse bezüglich des ersten Eingangsbereichs drehbaren ersten Ausgangsbereich, einen im Bereich höherer zu übertragender Drehmomente elastisch wirksamen zweiten Dämpferbereich mit einem zweiten Eingangsbereich und einem gegen die Wirkung einer zweiten Dämpferelementenanordnung um die Drehachse bezüglich des zweiten Eingangsbereichs drehbaren zweiten Ausgangsbereich.

Derartige Torsionsschwingungsdämpferanordnungen werden beispielsweise in Kupplungsscheiben eingesetzt, die in Kraftfahrzeugreibungskupplungen zur Drehmomentübertragung zwischen einem Antriebsaggregat, beispielsweise einer Brennkraftmaschine, und einem Getriebe, beispielsweise Handschaltgetriebe oder automatisiertes Schaltgetriebe, eingesetzt werden. Mit ihren beiden Dämpferbereichen, die grundsätzlich im Drehmomentenfluss seriell zueinander angeordnet sind, kann eine derartige Torsionsschwingungsdämpferanordnung auf verschiedene Bereiche der zu übertragenden Drehmomente abgestimmt werden. Der erste Dämpferbereich wird im Allgemeinen als Vordämpfer oder Niederlastdämpfer bezeichnet und ist dann elastisch wirksam, wenn die zu übertragenden Drehmomente beispielsweise im Leerlaufzustand oder bei geringer Lastanforderung vergleichsweise gering sind. Der zweite Dämpferbereich wird im Allgemeinen als Hauptdämpfer oder Lastdämpfer bezeichnet und ist dann elastisch wirksam, wenn durch entsprechende Lastanforderung ein Fahrzeug beispielsweise beschleunigt oder bei höherer Geschwindigkeit bewegt werden soll. Dabei ist es durchaus möglich, dass diese beiden Drehmomentenbereiche, in welchen die Dämpferbereiche jeweils wirksam sind, einander überlappen, so dass ein stufenloser bzw. sanfter Übergang vom Wirkungsbereich des ersten Dämpferbereichs zum Wirkungsbereich des zweiten Dämpferbereichs erreicht werden kann.

Um insbesondere den ersten Dämpferbereich differenzierter auf verschiedene Lastanforderungszustände abstimmen zu können, kann dieser mehrstufig ausgebildet sein, also beispielsweise mit einer ersten Dämpferstufe und einer zweiten Dämpferstufe, wobei die erste Dämpferstufe bis zu niedrigeren Drehmomenten elastisch wirksam ist, als die zweite Dämpferstufe. Dies bedeutet, dass die erste Dämpferstufe beispielsweise dann in ihrem elastischen Bereich wirksam ist, wenn eine Reibungskupplung zwar eingerückt ist, im Getriebe aber kein Gang eingelegt ist, oder wenn die Kupplung ausgerückt ist, also im Wesentlichen keine Last über die Torsionsschwingungsdämpferanordnung übertragen wird. Die zweite Dämpferstufe kann so abgestimmt sein, dass ihr Bereich elastischer Wirksamkeit dann genutzt werden kann, wenn ein Fahrzeug beispielsweise in einem Schleichfahrtmodus betrieben wird, in welchem die Lastanforderung an sich gering ist und ein Fahrzeug beispielsweise bei vergleichsweise geringer Geschwindigkeit mit näherungsweise konstanter Geschwindigkeit rollt.

Es sei in diesem Zusammenhang darauf hingewiesen, dass im Sinne der vorliegenden Erfindung ein Bereich, in welchem eine Dämpferstufe oder ein Dämpferbereich elastisch wirksam ist, derjenige Bereich ist, in welchem das zu übertragende Drehmoment ausreichend hoch ist, um den jeweiligen Eingangsbereich bezüglich des zugeordneten Ausgangsbereichs gegen die Rückstellwirkung einer jeweiligen Dämpferelementenanordnung, also beispielsweise einer Mehrzahl von als Schraubendruckfedern ausgebildeten Dämpferfedern, zu verdrehen, jedoch nicht so hoch ist, dass eine die Relativdrehung des Eingangsbereichs bezüglich des Ausgangsbereichs begrenzende Drehwinkelbegrenzung wirksam wird. Ein derartiger Bereich elastischer Wirksamkeit kann insbesondere bei vorgespannt eingebauten Dämpferelementenanordnungen nach unten hin begrenzt sein, so dass ein bestimmtes Mindestdrehmoment erforderlich ist, um die unter Vorspannung eingebaute Dämpferelementenanordnung weiter zu verformen, also in den Bereich der elastischen Wirksamkeit eintreten zu können.

Es ist die Aufgabe der vorliegenden Erfindung, eine Torsionsschwingungsdämpferanordnung, insbesondere in einer Kupplungsscheibe, vorzusehen, mit welcher eine verbesserte Schwingungsdämpfungscharakteristik erzielt werden kann.

Erfindungsgemäß wird diese Aufgabe gelöst durch eine Torsionsschwingungsdämpferanordnung, insbesondere in einer Kupplungsscheibe, umfassend einen in einem Bereich niedrigerer zu übertragender Drehmomente elastisch wirksamen ersten Dämpferbereich mit einem ersten Eingangsbereich und einem gegen die Wirkung einer ersten Dämpferelementenanordnung um eine Drehachse bezüglich des ersten Eingangsbereichs drehbaren ersten Ausgangsbereich, einen im Bereich höherer zu übertragender Drehmomente elastisch wirksamen zweiten Dämpferbereich mit einem zweiten Eingangsbereich und einem gegen die Wirkung einer zweiten Dämpferelementenanordnung um die Drehachse bezüglich des zweiten Eingangsbereichs drehbaren zweiten Ausgangsbereich, wobei der erste Dämpferbereich eine erste Dämpferstufe und eine zweite Dämpferstufe umfasst, wobei die erste Dämpferstufe bis zu niedrigeren Drehmomenten elastisch wirksam ist, als die zweite Dämpferstufe, wobei die erste Dämpferstufe einen Eingangsbereich und einen gegen die Wirkung einer ersten Dämpferelementeneinheit der ersten Dämpferelementenanordnung um die Drehachse bezüglich ihres Eingangsbereichs drehbaren Ausgangsbereich umfasst, wobei die zweite Dämpferstufe einen Eingangsbereich und einen gegen die Wirkung einer zweiten Dämpferelementeneinheit der ersten Dämpferelementenanordnung um die Drehachse bezüglich ihres Eingangsbereichs drehbaren Ausgangsbereich umfasst, ferner umfassend eine Reibformation zur Erzeugung einer Reibkraft wenigstens immer dann, wenn der Eingangsbereich der ersten Dämpferstufe sich bezüglich des Ausgangsbereichs der ersten Dämpferstufe um die Drehachse dreht und wenn der Eingangsbereich der zweiten Dämpferstufe sich bezüglich des Ausgangsbereichs der zweiten Dämpferstufe um die Drehachse dreht.

Da bei der erfindungsgemäßen Torsionsschwingungsdämpferanordnung dafür gesorgt ist, dass insbesondere im gesamten Wirkungsbereich des ersten Dämpferbereichs, also bei kleineren zu übertragenden Drehmomenten, immer dann, wenn eine Relativdrehung in zumindest einer der Dämpferstufen auftritt, dies begleitet ist mit der Erzeugung einer Reibkraft, besteht kein Totgang bzw. Relativdrehwinkelbereich, in welchem keine zur Energiedissipation führende Reibkraft verfügbar ist. Dies bedeutet, dass auch kleinste Relativauslenkungen zwischen einem jeweiligen Eingangsbereich und Ausgangsbereich zur Energieabfuhr durch in der Reibformation entstehende Reibarbeit führen.

Um eine Drehmomentübertragungsverbindung zwischen den beiden Dämpferbereichen erlangen zu können, kann vorgesehen sein, dass der Eingangsbereich der zweiten Dämpferstufe mit dem zweiten Ausgangsbereich vorzugsweise im Wesentlichen ohne Drehbewegungsspiel gekoppelt ist.

Um auch eine Drehmomentübertragungsverbindung zwischen den beiden Dämpferstufen des ersten Dämpferbereichs erreichen zu können, wird vorgeschlagen, dass der Ausgangsbereich der zweiten Dämpferstufe mit dem Eingangsbereich der ersten Dämpferstufe vorzugsweise im Wesentlichen ohne Drehbewegungsspiel gekoppelt ist. Dabei kann das Vermeiden jedweden Totgangs dadurch erlangt werden, dass ein Zwischenelement den Ausgangsbereich der zweiten Dämpferstufe und den Eingangsbereich der ersten Dämpferstufe bereitstellt.

Um eine hinsichtlich der zu übertragenden Drehmomente gestufte Wirksamkeit der beiden Dämpferbereiche bzw. auch der beiden Dämpferstufen erlangen zu können, wird vorgeschlagen, dass der Ausgangsbereich der zweiten Dämpferstufe bezüglich des Ausgangsbereichs der ersten Dämpferstufe in einem ersten Freiwinkelbereich um die Drehachse drehbar ist, dass der zweite Ausgangsbereich bezüglich des Ausgangsbereichs der ersten Dämpferstufe in einem zweiten Freiwinkelbereich drehbar ist und dass der zweite Freiwinkelbereich größer ist, als der erste Freiwinkelbereich.

Bei einer baulich sehr einfach zu realisierenden, gleichwohl jedoch zuverlässig wirkenden Ausgestaltung des ersten Dämpferbereichs wird vorgeschlagen, dass der Eingangsbereich der ersten Dämpferstufe Umfangsabstützbereiche für Dämpferelemente der ersten Dämpferelementeneinheit bereitstellt und dass der Ausgangsbereich der ersten Dämpferstufe Umfangsabstützbereiche für die Dämpferelemente der ersten Dämpferelementeneinheit bereitstellt, wobei die Umfangsabstützbereiche des Eingangsbereichs der ersten Dämpferstufe und die Umfangsabstützbereiche des Ausgangsbereichs der ersten Dämpferstufe zueinander radial gestaffelt liegen.

Da die erste Dämpferstufe im Allgemeinen dann elastisch wirksam ist, wenn nur sehr kleine Drehmomente zu übertragen sind bzw. an der ersten Dämpferelementeneinheit anliegen, führt die radiale Staffelung der Umfangsabstützbereiche des Eingangsbereichs und des Ausgangsbereichs der ersten Dämpferstufe nicht zu einer übermäßig starken ungleichen Belastung der Dämpferelemente derselben. Insbesondere kann bei derartiger Ausgestaltung vorgesehen sein, dass die Dämpferelemente der ersten Dämpferelementeneinheit in ihrem radial äußeren Bereich an den Umfangsabstützbereichen des Eingangsbereichs der ersten Dämpferstufe abgestützt oder abstützbar sind und in ihrem radial inneren Bereich an den Umfangsabstützbereichen des Ausgangsbereichs der ersten Dämpferstufe abgestützt oder abstützbar sind.

Bei der bei etwas größeren Drehmomenten elastisch wirksamen zweiten Dämpferstufe des ersten Dämpferbereichs kann zum Vermeiden einer ungleichmäßigen Belastung von Dämpferelementen derselben vorgesehen sein, dass der Eingangsbereich der zweiten Dämpferstufe Umfangsabstützbereiche für Dämpferelemente der zweiten Dämpferelementeneinheit bereitstellt und dass der Ausgangsbereich der zweiten Dämpferstufe Umfangsabstützbereiche für die Dämpferelemente der zweiten Dämpferelementeneinheit bereitstellt, wobei die Umfangsabstützbereiche des Eingangsbereichs der zweiten Dämpferstufe und die Umfangsabstützbereiche des Ausgangsbereichs der zweiten Dämpferstufe zueinander axial gestaffelt liegen. Insbesondere ist es dabei vorteilhaft, wenn die Dämpferelemente der zweiten Dämpferelementeneinheit in ihrem axial mittleren Bereich an den Umfangsabstützbereichen des Eingangsbereichs oder des Ausgangsbereichs der zweiten Dämpferstufe, vorzugsweise des Ausgangsbereichs der zweiten Dämpferstufe, abgestützt oder abstützbar sind und axial beidseits des axial mittleren Bereichs an den Umfangsabstützbereichen des Ausgangsbereichs oder des Eingangsbereichs der zweiten Dämpferstufe, vorzugsweise des Eingangsbereichs der zweiten Dämpferstufe, abgestützt oder abstützbar sind.

Zum Erhalt einer baulich kompakten Ausgestaltung wird vorgeschlagen, dass die erste Dämpferstufe radial innerhalb der zweiten Dämpferstufe angeordnet ist oder/und dass die erste Dämpferstufe und die zweite Dämpferstufe im Wesentlichen im gleichen Axialbereich angeordnet sind. Des Weiteren kann der erste Dämpferbereich an einer axialen Seite des zweiten Ausgangsbereichs angeordnet sein.

Bei einer insbesondere zur Übertragung größerer Drehmomente auch geeigneten und stabil realisierbaren Ausgestaltung des zweiten Dämpferbereichs kann vorgesehen sein, dass der zweite Eingangsbereich zwei in axialem Abstand zueinander angeordnete und miteinander fest verbundene Deckscheibenelemente umfasst und dass der zweite Ausgangsbereich ein axial zwischen die Deckscheibenelemente eingreifendes Zentralscheibenelement umfasst. Auch für die zweite Dämpferstufe des ersten Dämpferbereichs kann ein ähnlicher Aufbau dadurch bereitgestellt werden, dass der Eingangsbereich der zweiten Dämpferstufe zwei axial nebeneinander liegende, miteinander wenigstens drehfest verbundene und Umfangsabstützbereiche für Dämpferelemente der zweiten Dämpferelementeneinheit bereitstellende Käfigelemente umfasst und dass der Ausgangsbereich der zweiten Dämpferstufe ein axial zwischen die Käfigelemente eingreifendes und Umfangsabstützbereiche für die Dämpferelemente der zweiten Dämpferelementeneinheit bereitstellendes Zwischenelement umfasst. Durch diese die Umfangsabstützbereiche des Eingangsbereichs der zweiten Dämpferstufe bereitstellenden Käfigelemente kann nicht nur die Umfangsabstützung, sondern auch in beiden axialen Bereichen eine axiale Abstützung bzw. Halterung der Dämpferelemente der zweiten Dämpferelementeneinheit gewährleistet werden.

Der Ausgangsbereich der ersten Dämpferstufe kann eine Nabe umfassen, welche beispielsweise zur drehfesten Ankopplung an eine Welle mit einer Innenverzahnung ausgebildet sein kann.

Die erste Dämpferstufe und die zweite Dämpferstufe des ersten Dämpferbereichs können so ausgelegt sein, dass sie in einander nicht vollständig überlappenden Bereichen des zu übertragenden Drehmoments elastisch wirksam sind. Dies bedeutet, dass einerseits ein Bereich der zu übertragenden Drehmomente existiert, in welchem nur die erste Dämpferstufe elastisch wirksam ist, die zweite Dämpferstufe beispielsweise auf Grund vorgespannten Einbaus der Dämpferelemente derselben jedoch noch nicht elastisch wirksam ist, während ein höherer Drehmomentenbereich existiert, in welchem die erste Dämpferstufe auf Grund des Wirksamwerdens einer Drehwinkelbegrenzung nicht mehr elastisch wirksam sein kann, da der Eingangsbereich und der Ausgangsbereich derselben sich nicht weiter bezüglich einander verdrehen können und unter Verformung der Dämpferelemente der zweiten Dämpferelementeneinheit der Eingangsbereich und der Ausgangsbereich der zweiten Dämpferstufe sich bezüglich einander verdrehen können, die zweite Dämpferstufe also elastisch wirksam sein kann.

Um bei der erfindungsgemäßen Torsionsschwingungsdämpferanordnung zuverlässig in jedem Relativdrehbewegungszustand für eine Reibwirkung sorgen zu können, wird vorgeschlagen, dass die Reibformation einen zwischen dem zweiten Eingangsbereich und dem Ausgangsbereich der ersten Dämpferstufe wirksamen ersten Reibbereich mit wenigstens einer bezüglich des zweiten Eingangsbereichs drehfesten Reibfläche und wenigstens einer bezüglich des Ausgangsbereichs der ersten Dämpferstufe drehfesten Reibfläche umfasst. Da völlig unabhängig davon, welche Dämpferstufe bzw. welcher Dämpferbereich elastisch wirksam ist, grundsätzlich immer eine Relativdrehbewegung zwischen dem zweiten Eingangsbereich und dem Ausgangsbereich der ersten Dämpferstufe auftreten wird, ist dafür gesorgt, dass immer dann, wenn zu übertragende Drehmomente oder Drehungleichförmigkeiten eine Relativdrehbewegung erzwingen, auch Reibarbeit geleistet werden muss, insbesondere auch im Wirkungsbereich der ersten Dämpferstufe.

Die Reibformation kann ferner einen zwischen dem zweiten Eingangsbereich und dem Eingangsbereich der zweiten Dämpferstufe wirksamen zweiten Reibbereich mit wenigstens einer bezüglich des zweiten Eingangsbereichs drehfesten Reibfläche und wenigstens einer bezüglich des Eingangsbereichs der zweiten Dämpferstufe drehfesten Reibfläche umfassen. Dieser zweite Reibbereich wird insbesondere dann wirksam sein, wenn die zweite Dämpferstufe des ersten Dämpferbereichs elastisch wirksam ist, also eine Relativdrehung zwischen deren Eingangsbereich und Ausgangsbereich auftritt, oder wenn der zweite Dämpferbereich wirksam ist.

Ein weiterer Aspekt zur Erzeugung der gewünschten Reibwirkung kann dadurch realisiert sein, dass die Reibformation einen zwischen dem Eingangsbereich der zweiten Dämpferstufe oder/und dem zweiten Ausgangsbereich und dem Ausgangsbereich der zweiten Dämpferstufe oder/und dem Eingangsbereich der ersten Dämpferstufe wirksamen dritten Reibbereich mit wenigstens einer bezüglich des Eingangsbereichs der zweiten Dämpferstufe oder/und des zweiten Ausgangsbereichs drehfesten Reibfläche und wenigstens einer bezüglich des Ausgangsbereichs der zweiten Dämpferstufe oder/und des Eingangsbereichs der ersten Dämpferstufe drehfesten Reibfläche umfasst.

Die vorliegende Erfindung betrifft ferner eine Kupplungsscheibe, beispielsweise für eine Reibungskupplung in einem Kraftfahrzeug, umfassend eine erfindungsgemäß aufgebaute Torsionsschwingungsdämpferanordnung.

Bei einer derartigen Kupplungsscheibe können Kupplungsreibbeläge am zweiten Eingangsbereich vorgesehen sein, während der Ausgangsbereich der ersten Dämpferstufe eine Kupplungsnabe umfassen kann, um auf diese Art und Weise eine drehfeste Ankopplung an eine weiterführende Welle, beispielsweise eine Getriebeeingangswelle erlangen zu können.

Die Erfindung wird nachfolgend mit Bezug auf die beiliegenden Figuren detailliert beschrieben. Es zeigt:
- Fig. 1: eine Längsschnittdarstellung einer Torsionsschwingungsdämpferanordnung, geschnitten längs einer Linie I-I in Fig. 3;
- Fig. 2: eine der Fig. 1 entsprechende Längsschnittdarstellung, geschnitten längs einer Linie II-II in Fig. 3;
- Fig. 3: eine teilweise aufgeschnitten dargestellte Axialansicht der in der in den Fig. 1 und 2 dargestellten Torsionsschwingungsdämpferanordnung;
- Fig. 4: eine Explosionsdarstellung von wesentlichen Komponenten eines ersten Dämpferbereichs der Torsionsschwingungsdämpferanordnung der Fig. 1 und 2;
- Fig. 5: eine Axialansicht der zusammengefügten Komponenten der Fig. 4;
- Fig. 6: eine Querschnittdarstellung der zusammengefügten Komponenten der Fig. 4;
- Fig. 7: in perspektivischer Ansicht eine Abtriebsnabe der in den Fig. 1 und 2 dargestellten Torsionsschwingungsdämpferanordnung;
- Fig. 8: in perspektivischer Darstellung ein Zwischenelement eines ersten Dämpferbereichs der Torsionsschwingungsdämpferanordnung der Fig. 1 und 2;
- Fig. 9: in perspektivischer Darstellung ein Käfigelement des ersten Dämpferbereichs;
- Fig. 10: eine der Fig. 1 entsprechende Längsschnittdarstellung einer abgewandelten Ausgestaltungsart;
- Fig. 11: eine Kennlinie, welche das über dem Verdrehwinkel aufgetragene Drehmoment für den ersten Dämpferbereich darstellt;
- Fig. 12: eine der Fig. 11 entsprechende Darstellung für zwei abgewandelte Ausgestaltungsarten des ersten Dämpferbereichs;
- Fig. 13: eine Schaltbilddarstellung einer Torsionsschwingungsdämpferanordnung mit einem Kennlinienverlauf, wie in Fig. 12 dargestellt;
- Fig. 14: eine weitere der Fig. 11 entsprechende Darstellung einer Kennlinie des ersten Dämpferbereichs;
- Fig. 15: in Schaltbilddarstellung einer Torsionsschwingungsdämpferanordnung mit einem Kennlinienverlauf gemäß Fig. 14.

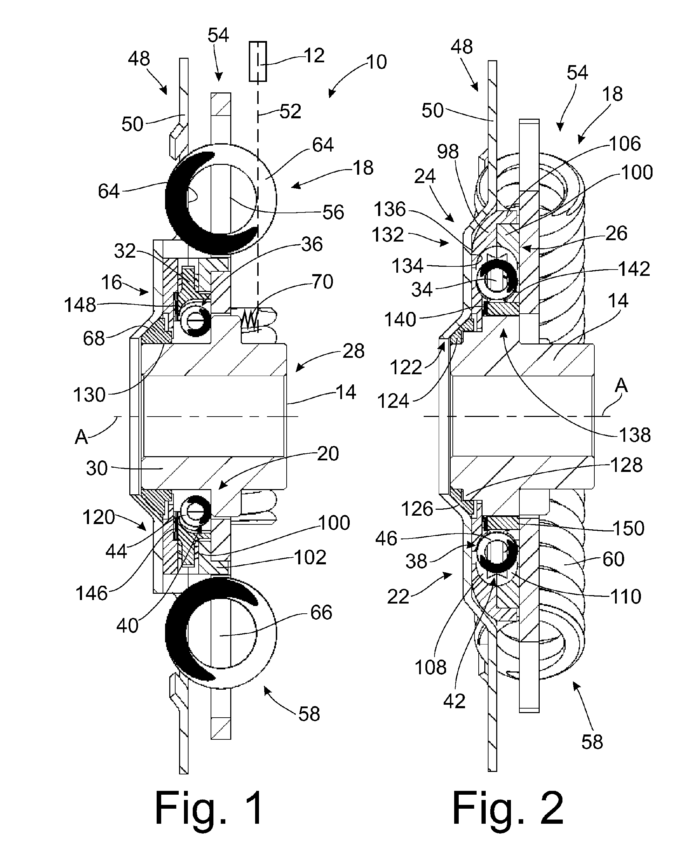

Die Fig. 1 bis 9 zeigen in verschiedener Darstellung eine allgemein mit 10 bezeichnete Torsionsschwingungsdämpferanordnung, die beispielsweise in eine Kupplungsscheibe einer Reibungskupplung integriert sein kann. Die Torsionsschwingungsdämpferanordnung 10 umfasst im Drehmomentübertragungsweg zwischen den nur schematisch dargestellten Reibbelägen 12 und einer Kupplungsnabe 14 einen als Niederlastdämpfer wirksamen ersten Dämpferbereich 16 und einen als Hauptlastdämpfer wirksamen zweiten Dämpferbereich 18. Im Zugzustand, also bei Übertragung eines Drehmoments von einem Antriebsaggregat in Richtung zu einem Getriebe, liegt der zweite Dämpferbereich 18 im Drehmomentenfluss vor dem ersten Dämpferbereich 16.

Der erste Dämpferbereich 16 umfasst zwei Dämpferstufen 20, 22. Dabei ist die erste Dämpferstufe 20 dieser beiden Dämpferstufen des ersten Dämpferbereichs 16 so ausgelegt, dass sie dann elastisch wirksam ist, wenn im Wesentlichen keine oder nur sehr geringe Drehmomente zu übertragen sind. Die zweite Dämpferstufe 22 des ersten Dämpferbereichs 16 ist so ausgelegt, dass sie dann elastisch wirksam ist, wenn ein Fahrzeug sich in Schleichfahrt befindet, also beispielsweise mit konstanter, geringer Geschwindigkeit gefahren wird, was ebenfalls nur die Übertragung eines vergleichsweise geringen Drehmoments erfordert. In diesen Zuständen, in welchen der erste Dämpferbereich 16 elastisch, also schwingungsdämpfend bzw. schwingungsaufnehmend wirksam ist, ist der zweite Dämpferbereich 18 im Wesentlichen nicht elastisch wirksam, also als starre Baugruppe zu betrachten. Sind über die Torsionsschwingungsdämpferanordnung 10 größere Drehmomente zu übertragen, so ist der zweite Dämpferbereich 18 elastisch bzw. schwingungsdämpfend wirksam, während der erste Dämpferbereich 16 dann im Wesentlichen als starre Baugruppe zu betrachten ist.

Der erste Dämpferbereich 16 weist einen allgemein mit 24 bezeichneten ersten Eingangsbereich auf. Dieser erste Eingangsbereich 24 des ersten Dämpferbereichs 16 stellt im Wesentlichen auch einen Eingangsbereich 26 der zweiten Dämpferstufe 22 des ersten Dämpferbereichs 16 bereit. Die bereits angesprochene Kupplungsnabe 14 stellt einen ersten Ausgangsbereich 28 des ersten Dämpferbereichs 16 und gleichzeitig auch einen Ausgangsbereich 30 der ersten Dämpferstufe 20 des ersten Dämpferbereichs 16 bereit.

Ein nachfolgend noch detaillierter beschriebenes Zwischenelement 32 stellt insbesondere mit seinem radial äußeren Bereich einen Ausgangsbereich 34 der zweiten Dämpferstufe 22 bereit und stellt gleichermaßen insbesondere mit seinem radial inneren Bereich einen Eingangsbereich 36 der ersten Dämpferstufe 20 des ersten Dämpferbereichs 16 bereit.

Der erste Dämpferbereich 16 umfasst ferner eine allgemein mit 38 bezeichnete Dämpferelementenanordnung. Diese umfasst in Zuordnung zur ersten Dämpferstufe 20 eine erste Dämpferelementeneinheit 40 und in Zuordnung zur zweiten Dämpferstufe 22 eine zweite Dämpferelementeneinheit 42. Die erste Dämpferelementeneinheit 40 wiederum umfasst eine Mehrzahl von in Umfangsrichtung aufeinander folgend angeordneten, beispielsweise als Schraubendruckfedern ausgebildeten Dämpferelementen 44. Die zweite Dämpferelementeneinheit 42 umfasst beispielsweise ebenfalls als Schraubendruckfedern ausgebildete, in Umfangsrichtung aufeinander folgende Dämpferelemente 46. Es sei hier darauf hingewiesen, dass diese Dämpferelemente 44 bzw. 46 auch mehrere ineinander geschachtelte Federn mit unterschiedlicher Länge oder/und unterschiedlicher Steifigkeit umfassen können. Weiterhin können alternativ oder zusätzlich als Dämpferelemente auch andere Elastomerelemente, wie z.B. Gummiblöcke oder dergleichen, eingesetzt werden. Grundsätzlich können derartige Dämpferelemente auch ein kompressibles oder über eine Drossel verdrängbares Fluid umfassen.

Der zweite Dämpferbereich 18 umfasst einen zweiten Eingangsbereich 48, der im dargestellten Beispiel zwei in Richtung einer Drehachse A in Abstand zueinander liegende und beispielsweise durch Vernietung oder dergleichen fest miteinander verbundene Deckscheibenelemente 50, 52 umfasst. In den Figuren ist lediglich das Deckscheibenelement 50 konstruktiv ausgeführt dargestellt. Das Deckscheibenelement 52 ist in Fig. 1 durch Strichlinie angedeutet. Die Reibbeläge 12 einer die Torsionsschwingungsdämpferanordnung 10 aufweisenden Kupplungsscheibe können beispielsweise am Deckscheibenelement 52 getragen sein.

Weiterhin umfasst der zweite Dämpferbereich 18 einen zweiten Ausgangsbereich 54. Im dargestellten Ausgestaltungsbeispiel umfasst dieser ein Zentralscheibenelement 56, das axial zwischen den beiden Deckscheibenelementen 50, 52 angeordnet ist. Wie nachfolgend noch erläutert, ist mit diesem zweitem Ausgangsbereich 54 bzw. dem Zentralscheibenelement 56 der Eingangsbereich 26 der zweiten Dämpferstufe 22 drehfest gekoppelt.

Eine zweite Dämpferelementenanordnung 58 des zweiten Dämpferbereichs 18 umfasst mehrere, im dargestellten Beispiel vier, in Umfangsrichtung aufeinander folgende Dämpferelemente 60, die beispielsweise ebenfalls als Schraubendruckfedern ausgebildet sein können und mehrere ineinander geschachtelte bzw. auch in Umfangsrichtung aufeinander folgende Federn umfassen können. Auch bei der zweiten Dämpferelementenanordnung 58 können die Dämpferelemente 60 so wie vorangehend mit Bezug auf die erste Dämpferelementenanordnung 38 angegeben ausgeführt sein.

Zur Drehmomentübertragung zwischen dem zweiten Eingangsbereich 48 und dem zweiten Ausgangsbereich 54 stützen sich die Dämpferelemente 60 der zweiten Dämpferelementenanordnung 58 an jeweiligen an den Deckscheibenelementen 50, 52 des zweiten Eingangsbereichs 48 gebildeten Umfangsabstützbereichen 62, 64 einerseits und an in Zuordnung zu diesen am zweiten Ausgangsbereich 54 bzw. dem Zentralscheibenelement 56 gebildeten Umfangsabstützbereichen 66 ab. Diese Umfangsabstützbereiche 62, 64, 66 sind beispielsweise an Umfangsendbereichen jeweiliger Federfenster in den Deckscheibenelementen 50, 52 bzw. im Zentralscheibenelement 56 bereitgestellt.

Der zweite Eingangsbereich 48, insbesondere das Deckscheibenelement 50 desselben, ist in seinem radial inneren Bereich konisch ausgeformt und über einen entsprechend konisch geformten Lagerring 68 bezüglich der Kupplungsnabe 14 drehbar gelagert. Durch ein sich bezüglich der Kupplungsnabe 14 einerseits und des Deckscheibenelements 52 andererseits abstützendes, in Fig. 1 nur symbolartig dargestelltes Vorspannelement 70, beispielsweise Tellerfeder oder Wellfeder oder dergleichen, ist der erste Eingangsbereich 48 axial bezüglich der Kupplungsnabe 14 vorgespannt, so dass das Deckscheibenelement 50 in seinem radial innen liegenden, konisch ausgeformten Bereich in definierter Anlage an dem Lagerring 68 gehalten ist.

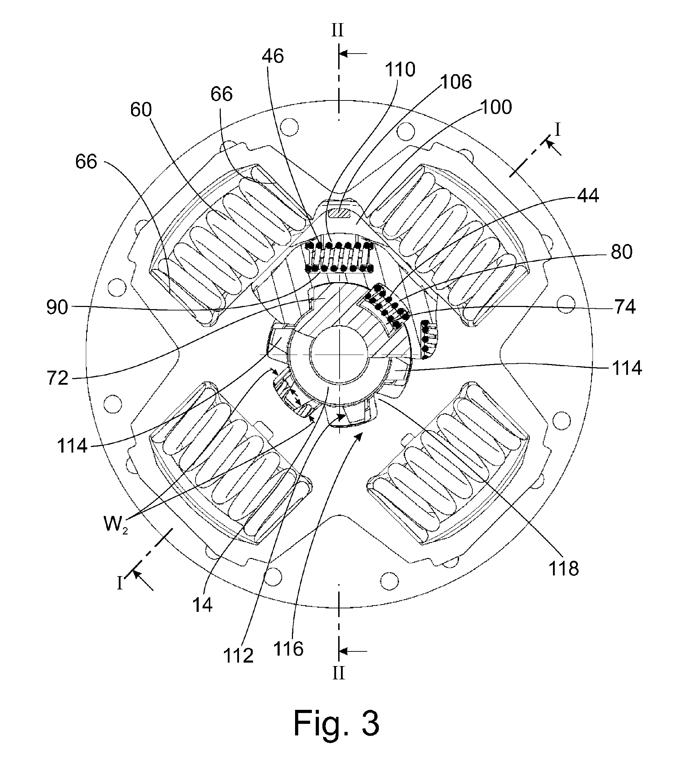

Nachfolgend wird insbesondere mit Bezug auf die Fig. 3 bis 9 der konstruktive Aufbau des ersten Dämpferbereichs 16 detailliert erläutert.

Die im Wesentlichen den Ausgangsbereich 30 der ersten Dämpferstufe 20 bzw. auch den ersten Ausgangsbereich 28 bereitstellende Kupplungsnabe 14 weist nach radial außen ragende Radialvorsprünge 72 auf, die an zwei einander diametral gegenüberliegenden Umfangspositionen Aussparungen 74 jeweils zur Aufnahme eines Dämpferelements 44 der ersten Dämpferelementeneinheit 40 aufweisen.

Die Aussparungen 74 sind in Umfangsrichtung durch jeweilige Umfangsabstützbereiche 76, 78 begrenzt, an welchen die Dämpferelemente 44 sich abstützen können bzw. auch unter Vorspannung anliegen können.

Das auch den Eingangsbereich 36 der ersten Dämpferstufe 20 bereitstellende Zwischenelement 32 weist in Entsprechung zu den Aussparungen 74 Aussparungen 80 auf, in welche die Dämpferelemente 44 mit ihrem nach radial außen über die Radialvorsprünge 72 hinaus ragenden, also radial äußeren Bereich eingreifen. Die nach radial innen offenen Aussparungen 80 sind in Umfangsrichtung durch jeweilige Umfangsabstützbereiche 82, 84 begrenzt, deren Umfangsabstand beispielsweise dem Umfangsabstand der Umfangsabstützbereiche 76, 78 an der Kupplungsnabe 14 entsprechen kann. Auch an den Umfangsabstützbereichen 82, 84 können die Dämpferelemente 44 sich in Umfangsrichtung abstützen, so dass deren radial innerer Bereich an den Umfangabstützbereichen 76, 78 der Kupplungsnabe 14 und mithin des Ausgangsbereichs 30 der ersten Dämpferstufe 20 abgestützt ist, während ihr radial äußerer Bereich an den Umfangsabstützbereichen 82, 84 des Eingangsbereichs 36 der ersten Dämpferstufe 20 abgestützt bzw. abstützbar ist. Auf diese Art und Weise können gegen die Rückstellwirkung der Dämpferelemente 44 die Kupplungsnabe 14 und das Zwischenelement 32 sich um die in Fig. 1 auch erkennbare Drehachse A bezüglich einander drehen.

Um diese Relativdrehbewegung zu begrenzen, sind zwischen den Radialvorsprüngen 72 an der Kupplungsnabe 14 mit einem Winkel 90° versetzt zu den Aussparungen 74 weitere Aussparungen 86 einander diametral gegenüberliegend ausgebildet. In diese Aussparungen 86 greifen nach radial innen ragende Radialvorsprünge 88 des Zwischenelements 32 mit einem Umfangsbewegungsspiel ein, so dass, vorgegeben durch dieses Umfangsbewegungsspiel der Eingangsbereich 36 und der Ausgangsbereich 30 der ersten Dämpferstufe 20 nur begrenzt im Bereich eines ersten Freiwinkels W₁ bezüglich einander drehbar sind. Dabei kann die Anordnung derart sein, dass ausgehend von einer Grund-Relativdrehlage in beiden Relativdrehrichtungen das gleiche Bewegungsausmaß möglich ist, grundsätzlich kann aber auch eine Differenzierung für den Schubzustand und den Zugzustand vorgesehen sein, so dass beispielsweise im Schubzustand ein maximaler Relativdrehwinkel von 1 bis 4° möglich sein kann, während im Zugzustand ein maximaler Relativdrehwinkel 4 bis 8° ermöglicht sein kann.

Das Zwischenelement 32 stellt in seinem radial äußeren Bereich den Ausgangsbereich 34 der zweiten Dämpferstufe 22 bereit. Hierfür sind beispielsweise mit einem Winkelabstand von 90° zueinander nach radial außen offene Aussparungen 90 vorgesehen. Diese nehmen die Dämpferelemente 46 der zweiten Dämpferstufe 22 auf. In ihren Umfangsendbereichen sind die Aussparungen 90 begrenzt durch jeweilige Umfangsabstützbereiche 92, 94, an welchen die Dämpferelemente 46 sich abstützen können bzw. unter Vorspannung abgestützt sein können. Um insbesondere eine radiale Fixierung der Dämpferelemente 46 zu erreichen, können an den Umfangsabstützbereichen 92, 94 in Umfangsrichtung in die Endbereiche der Dämpferelemente 46 eingreifende Haltevorsprünge 96 ausgebildet sein.

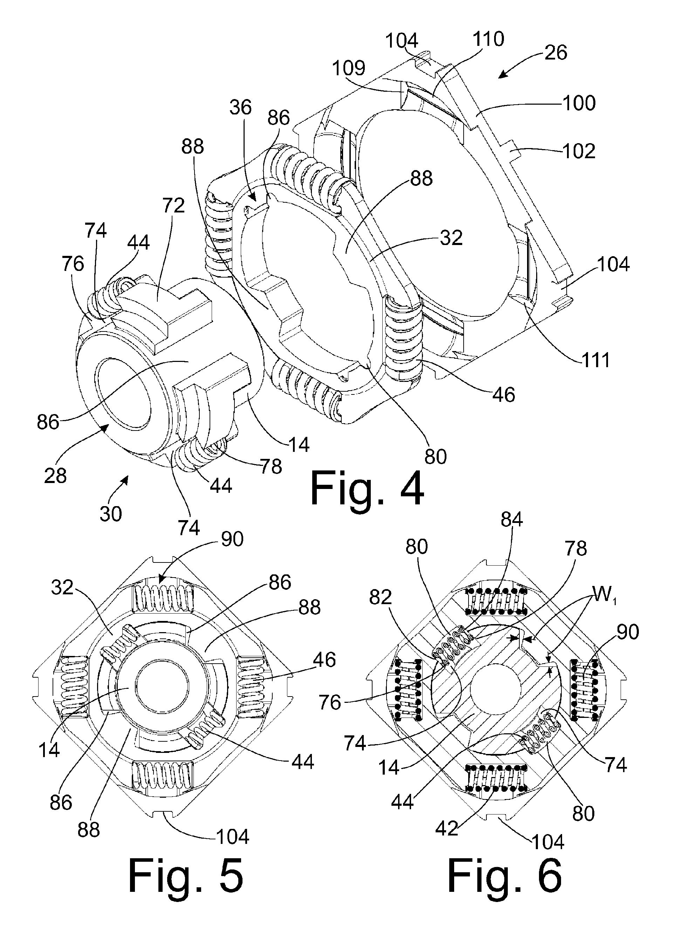

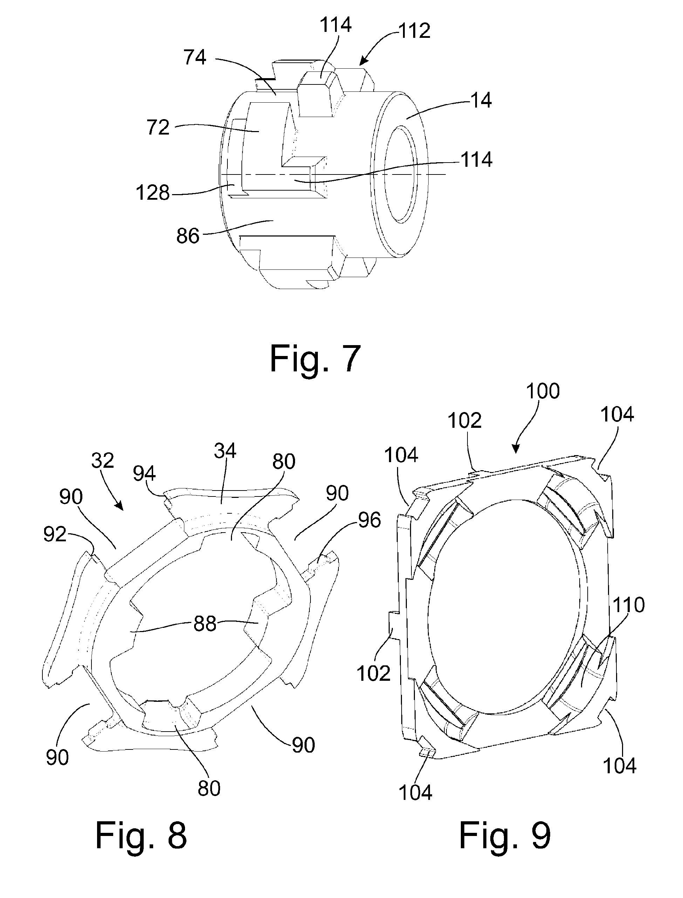

Der Eingangsbereich 26 der zweiten Dämpferstufe 22 ist bereitgestellt durch zwei axial nebeneinander liegende bzw. bereichsweise auch aneinander anliegende Käfigelemente 98, 100. Das in den Fig. 1 und 2 auch erkennbare unmittelbar neben dem Zentralscheibenelement 56 liegende Käfigelement 100 weist Axialvorsprünge 102 auf, die in zugeordnete Aussparungen des Zentralscheibenelements 56 im Wesentlichen bewegungsspielfrei eingreifen und somit eine drehfeste Ankopplung des Käfigelements 100 an den zweiten Ausgangsbereich realisieren. Wie beispielsweise in den Fig. 4 und 9 erkennbar, kann das näherungsweise quadratisch, ringartig ausgebildete Käfigelement 100 an seinen vier Längsseiten jeweils mittig einen derartigen Axialvorsprung 102 aufweisen. In den dazu um etwa 45° versetzten Eckbereichen weist das Käfigelement 100 Aussparungen 104 auf, in welche jeweils ein Axialvorsprung 106 des anderen Käfigelements 98 im Wesentlichen drehbewegungsspielfrei eingreift. Auf diese Art und Weise sind die beiden ansonsten zueinander im Wesentlichen komplementär bzw. zu ihrer Trennebene spiegelsymmetrisch aufgebauten Käfigelemente 98, 100 miteinander drehfest gekoppelt.

Wie bei dem in Fig. 4 und Fig. 9 dargestellten Käfigelement 100 veranschaulicht, weisen die beiden Käfigelemente 98, 100 in Zuordnung zu den Dämpferelementen 46 der zweiten Dämpferelementeneinheit 42 jeweilige in ihrer Formgebung beispielsweise an die Umfangskontur der Dämpferelemente 46 schalenartig angepasste Aussparungen 108, 110 auf, in welchen die Dämpferelemente 46 aufgenommen sind. Die Aussparungen 108 und 110 sind in Umfangsrichtung durch jeweilige Umfangsabstützbereiche 109 bzw. 111 begrenzt, an welchen die Dämpferelemente 46 sich axial beidseits der Umfangsabstützbereiche 92, 94 am Zwischenelement 32 abstützen oder abstützen können.

Während bei der ersten Dämpferstufe 20 die Umfangsabstützbereiche 82, 84 des Eingangsbereichs 36 und 76, 78 des Ausgangsbereichs 30 zueinander radial gestaffelt liegen, liegen bei der zweiten Dämpferstufe 22 die Umfangsabstützbereiche 109, 111 des Eingangsbereichs 26 und 92, 94 des Ausgangsbereichs 34 zueinander axial versetzt, wobei auf Grund der Ausgestaltung in der zweiten Dämpferstufe 22 die Dämpferelemente 46 sowohl vom Eingangsbereich 26, auch vom Ausgangsbereich 34 symmetrisch angesteuert werden, während bei der ersten Dämpferstufe 20 durch die radiale Staffelung eine unsymmetrische Ansteuerung erfolgt. Da die Dämpferelemente 44 der ersten Dämpferstufe 20 eine vergleichsweise geringere Steifigkeit aufweisen, als die Dämpferelemente 46 der zweiten Dämpferstufe 22 und mithin nur bei vergleichsweise geringeren Drehmomenten auf Kompression belastet werden, ist die unsymmetrische Ansteuerung in der ersten Dämpferstufe 20 unproblematisch. In der zweiten Dämpferstufe 22, welche auf Grund der vergleichsweise höheren Steifigkeit der Dämpferelemente 46 derselben auch bei etwas höheren Drehmomenten elastisch wirksam ist, wird eine Ausweich- oder Verkippbewegung der Dämpferelemente 46 durch die symmetrische Ansteuerung vermieden.

Um auch eine Relativdrehbewegungsbegrenzung für die zweite Dämpferstufe 22 des ersten Dämpferbereichs 16 vorzusehen und damit eine Überlastung der Dämpferelemente 46 beispielsweise durch Aufblocksetzen von Schraubendruckfedern zu vermeiden, ist an der Kupplungsnabe 14 axial angrenzend an die Radialvorsprünge 72 eine Verzahnung 112 mit nach radial außen vorspringenden Zähnen 114 ausgebildet. Dabei kann ein Teil der Zähne 114 unmittelbar übergehend in die Radialvorsprünge 72 ausgebildet sein, während ein anderer Teil der Zähne 114 in Umfangsrichtung dort positioniert sein kann, wo zwischen zwei Radialvorsprüngen 72 eine Aussparung 74 zur Aufnahme der Dämpferelemente 44 gebildet ist. Auf diese Art und Weise kann auch eine Axialabstützung für diese Dämpferelemente 44 gebildet sein.

In Zuordnung zur Verzahnung 112 an der Kupplungsnabe 14 ist am radial inneren Bereich des Zentralscheibenelements 56, also des zweiten Ausgangsbereichs 54, eine in Fig. 3 erkennbare Verzahnung 116 mit nach radial innen greifenden Zähnen 118 ausgebildet. Die Zähne 118 greifen in Umfangsaussparungen zwischen jeweils zwei Zähnen 114 der Verzahnung 112 mit Umfangsbewegungsspiel ein, so dass zwischen diesen beiden Verzahnungen 112, 116 ein zweiter Freiwinkel W₂ gebildet ist. Auch hier kann die Anordnung so sein, dass unabhängig von der Relativdrehrichtung zwischen dem Deckscheibenelement 56 und der Kupplungsnabe 14, das gleiche Ausmaß einer Relativdrehbewegung ermöglicht ist, also eine symmetrische Ausgestaltung für den Zugzustand und den Schubzustand vorliegt, oder aber hinsichtlich des maximalen Relativdrehwinkels eine Differenzierung zwischen Zugzustand und Schubzustand vorgenommen wird.

Wichtig ist jedoch, dass der zweite Freiwinkel W₂, also die ermöglichte Relativdrehung zwischen dem zweiten Ausgangsbereich 54 und der Kupplungsnabe 14, größer ist, als der erste Freiwinkel W₁, also die zwischen dem Zwischenelement 32 und der Kupplungsnabe 14 ermöglichte Relativdrehung. Dies hat zur Folge, dass im Wirkungsbereich der ersten Dämpferstufe 20 die Verzahnungen 112, 116 nicht in gegenseitige Anlage kommen, also eine Weiterdrehung des Zentralscheibenelements 56 bezüglich der Kupplungsnabe 14 blockieren. Auch in einem Zustand, in welchem die in die Aussparungen 86 eingreifenden Vorsprünge 88 des Zwischenelements 32 eine Weiterdrehung bezüglich der Kupplungsnabe 14 verhindernd wirksam werden, sind die Verzahnungen 112, 116 noch nicht in Drehbewegungsblockiereingriff. Erst bei weitergehender Relativverdrehung des mit dem Zentralscheibenelement 56 drehfest gekoppelten Eingangsbereichs 26 der zweiten Dämpferstufe 22 bezüglich des Ausgangsbereichs 34 der zweiten Dämpferstufe 22 nähern sich die Zähne 114 und 118 in Umfangsrichtung einander an, bis ein Anschlagzustand erreicht wird und auch eine weitergehende Relativdrehung des Eingangsbereichs 26 bezüglich des Ausgangsbereichs 34 der zweiten Dämpferstufe nicht mehr möglich ist.

Bis zur Erreichung dieses Zustands ist der erste Dämpferbereich 16 mit seinen auch gestuft wirksam werdenden Dämpferstufen 20, 22 elastisch wirksam. Ab Erreichen des Anschlagzustands der Verzahnungen 112, 116 aneinander ist der erste Dämpferbereich 16 überbrückt bzw. nicht mehr elastisch wirksam. Eine weitere Relativdrehung zwischen dem zweiten Eingangsbereich 48 und der Kupplungsnabe 14 ist dann nur noch im Bereich der elastischen Wirksamkeit des zweiten Dämpferbereichs 18, also unter Kompression der Dämpferelemente 60 der zweiten Dämpferelementenanordnung 58 möglich.

Bei der vorangehend detailliert beschriebenen Torsionsschwingungsdämpferanordnung 10 ist zur Abfuhr von Schwingungsenergie bei Auftreten von Drehschwingungen bzw. Drehungleichförmigkeiten eine allgemein mit 120 bezeichnete Reibformation vorgesehen. Diese umfasst einen ersten Reibbereich 122, welcher eine Reibfläche 124 an der konischen Ausformung des Deckscheibenelements 50 und somit dem zweiten Eingangsbereich 48 und eine komplementäre Reibfläche 126 am Lagerring 68 umfasst. Um für eine definierte Reibung zwischen diesen beiden Reibflächen 124, 126 sorgen zu können, ist der Lagerring 68 bezüglich der Kupplungsnabe 14 drehfest gehalten. Hierzu weist die Kupplungsnabe 14 in Fig. 7 erkennbare, in Umfangsrichtung begrenzte Radialvorsprünge 128 auf, die dort, wo zwischen den Radialvorsprüngen 72 Aussparungen 86 gebildet sind, gleichermaßen unterbrochen sind. In diese Unterbrechungen können Drehkopplungsvorsprünge 130 des Lagerrings 68 vorzugsweise ohne Drehbewegungsspiel eingreifen.

Der erste Reibbereich 122 ist also immer dann wirksam, wenn der zweite Eingangsbereich 48 sich bezüglich der Kupplungsnabe 14 und mithin des Ausgangsbereichs 30 der ersten Dämpferstufe 20 um die Drehachse A verdreht. Der erste Reibbereich 122 ist also grundsätzlich immer dann wirksam, wenn eine Relativdrehung in der ersten Dämpferstufe 20 des ersten Dämpferbereichs 16 auftritt, wenn eine Relativdrehung in der zweiten Dämpferstufe 22 des ersten Dämpferbereichs 16 auftritt und wenn eine Relativdrehung im zweiten Dämpferbereich 18 auftritt. Es existiert kein durch Totgang oder dergleichen ermöglichter Zustand, in welchem bei Relativdrehung irgendwelcher Komponenten irgendeiner Dämpferstufe oder irgendeines Dämpferbereichs keine Reibkraft generiert werden könnte.

Ein zweiter Reibbereich 132 der Reibformation 120 ist wirksam zwischen dem zweiten Eingangsbereich 48 und dem Eingangsbereich 26 der zweiten Dämpferstufe 20. Der zweite Reibbereich 132 umfasst eine Reibfläche 134 am Deckscheibenelement 50 und eine diese axial abstützende Reibfläche 136 am Eingangsbereich 26, insbesondere dem Käfigelement 98 desselben. Der zweite Reibbereich 132 ist grundsätzlich immer dann wirksam, wenn eine Relativdrehbewegung zwischen dem zweiten Eingangsbereich 48 und dem Eingangsbereich 26 der zweiten Dämpferstufe 22 auftritt. Eine derartige Relativdrehbewegung entsteht auf Grund der drehfesten Ankopplung des Eingangsbereichs 26 an den zweiten Ausgangsbereichs 54 immer dann, wenn eine Relativdrehung zwischen dem zweiten Eingangsbereich 48 und dem zweiten Ausgangsbereich 54 auftritt, mithin also der zweite Dämpferbereich 18 elastisch wirksam ist.

Ein dritter Reibbereich 138 der Reibformation 120 umfasst einerseits Reibflächen 140, 142 am Käfigelement 98 bzw. dem Zentralscheibenelement 56 und umfasst andererseits Reibflächen 146 an einem beispielsweise mit dem Zwischenelement 32 sich drehenden Vorspannelement 148, beispielsweise Tellerfeder oder Wellfeder oder dergleichen, und Reibflächen 150 am Zwischenelement 32. Durch die Wirkung des Vorspannelements 148 ist das Zwischenelement 32 mit seiner Reibfläche 150 gegen die Reibfläche 142 des Zentralscheibenelements 56 gepresst, wobei das beispielsweise mit dem Zwischenelement 32 sich gemeinsam bewegende Vorspannelement 148 sich reibend am Käfigelement 98 abstützt. Der dritte Reibbereich 138 ist also immer dann wirksam, wenn eine Relativdrehbewegung zwischen dem Eingangsbereich 26 der zweiten Dämpferstufe 22 und mithin auch dem zweiten Ausgangsbereich 54 und dem Ausgangsbereich 34 der zweiten Dämpferstufe 22 auftritt. Dies ist dann der Fall, wenn bei bereits erfolgter Überbrückung der ersten Dämpferstufe 20 im Bereich der elastischen Wirksamkeit der zweiten Dämpferstufe 22 deren Eingangsbereich 26 sich in Umfangsrichtung bezüglich deren Ausgangsbereich 34 bewegt.

Aus den vorangehenden Darlegungen ist zu erkennen, dass für den gesamten elastischen Wirkungsbereich der Torsionsschwingungsdämpferanordnung 10 das Entstehen einer Reibwirkung sichergestellt ist, wobei für unterschiedliche Lastzustände unterschiedliche bzw. zum Teil zusätzliche Reibbereiche wirksam sein können. Somit ist dafür gesorgt, dass unabhängig davon, in welchem Lastzustand die Torsionsschwingungsdämpferanordnung 10 bzw. eine damit ausgestattete Kupplungsscheibe betrieben wird, die durch Drehungleichförmigkeiten bzw. Drehschwingungen eingeleitete Energie zumindest teilweise durch die in der Reibformation 120 generierte Reibarbeit dissipiert werden kann. Es ist kein Zustand vorhanden, in welchem durch Totgang oder Drehbewegungsspiel keine Reibarbeit bei Relativdrehbewegung zweier Komponenten zu leisten wäre.

Der mit Bezug auf die Fig. 1 bis 9 beschriebene Aufbau der Torsionsschwingungsdämpferanordnung 10 ist sehr kompakt, wozu auch beiträgt, dass der erste Dämpferbereich 16 an einer axialen Seite bezüglich des zweiten Ausgangsbereichs 54, d.h. des Zentralscheibenelements 56, angeordnet ist, wobei weiterhin die beiden Dämpferstufen 20, 22 des ersten Dämpferbereichs zueinander radial gestaffelt und im Wesentlichen im gleichen axialen Bereich liegen, d.h., einander im Wesentlichen axial vollständig überlappen. Zu dem einfachen und kompakten Aufbau trägt auch bei, dass die Dämpferelemente 44 der ersten Dämpferstufe 20 teilweise in die Kupplungsnabe 14 integriert sind und diese die Dämpferelemente 44 im Wesentlichen direkt ansteuert, d.h. in Umfangsrichtung abstützt. Ferner übernimmt die Kupplungsnabe 14 sowohl in Zusammenwirkung mit dem Zwischenelement 32, als auch in Zusammenwirkung mit dem Zentralscheibenelement 56 die Funktionalität der Drehwegbegrenzung, was den einfachen Aufbau unterstützt. Da weiterhin die Kupplungsnabe 14 mit dem Lagerring 68 drehfest gekoppelt ist, wird bei den Reibflächen 124, 126 eine definierte Reibwechselwirkung erzielt. Dazu trägt auch die durch Einsatz des Vorspannelements 70 generierte Vorspannwirkung bei. Es sei hier darauf hingewiesen, dass in den Anlagebereich zwischen dem Deckscheibenelement 50 und dem Lagerring 68 beispielsweise ein konusartig geformter Federring gelegt sein kann, welcher bezüglich einer dieser Komponenten dann drehfest gehalten sein kann und insofern auch die Funktionalität einer Reibfläche übernimmt. Ein derartiger Federring ist beispielsweise aus der DE 196 52 104 C1 bekannt, deren diesbezügliche Offenbarung hiermit ausdrücklich in Bezug genommen wird. Damit wird eine Elastizität in den Anlagekontakt zwischen dem zweiten Eingangsbereich 48 und dem Lagerring 68 integriert, welche insbesondere auch den Ausgleich von Taumelbewegungen gestattet.

Dadurch, dass der erste Dämpferbereich 16 und das Zentralscheibenelement 56 des zweiten Dämpferbereichs 18 axial nebeneinander positioniert sind und mit verschiedenen axialen Bereichen der Kupplungsnabe 14 zusammen wirken, kann die Kupplungsnabe 14 hierfür jeweils auch mit geeigneter Geometrie der Verzahnungen bzw. Aussparungen aufgebaut werden.

Auch in das ringscheibenartig ausgebildete Zwischenelement 32 sind verschiedene Funktionalitäten integriert. Einerseits dient es der Wechselwirkung mit den Dämpferelementen 44 der ersten Dämpferstufe 20 und stützt diese gegen Ausweichbewegung nach radial außen, insbesondere bei der in der ersten Dämpferstufe 20 vorhandenen unsymmetrischen Ansteuerung der Dämpferelemente 44. Ferner ist das Zwischenelement 32 im dritten Reibbereich 138 reibend wirksam und erzeugt insbesondere dann eine Reibwirkung, wenn die zweite Dämpferstufe 22 des ersten Dämpferbereichs 16 elastisch wirksam ist. Dabei ist in axialer Richtung das Zwischenelement 32 näherungsweise so breit bzw. lang, wie die Dämpferelemente 44 der ersten Dämpferelementeneinheit 40 in axialer Richtung ausgedehnt sind. Das Zwischenelement 32 ist vorzugsweise aus Kunststoffmaterial aufgebaut und kann so eine vergleichsweise geringe Masse bei engen Fertigungstoleranzen aufweisen. Da die Aussparungen 90 zur Aufnahme der Dämpferelemente 46 der zweiten Dämpferstufe 22 nach radial außen offen sind, hier also nicht durch zusätzliche Materialabschnitte überdeckt sind, kann ferner eine radial kompakte Bauweise gewährleistet werden. Ferner ist durch das Vorsehen der Haltevorsprünge 96 gewährleistet, dass die durch das Zwischenelement 32 angesteuerten Dämpferelemente 46 der zweiten Dämpferstufe 22 auch bei Fliehkrafteinwirkung nicht nach radial außen ausweichen können. Die axial vergleichsweise breite Ausgestaltung des Zwischenelements 32 insbesondere in ihrem mit den Dämpferelementen 44 der ersten Dämpferstufe 20 zusammenwirkenden Bereich ermöglicht eine entsprechend breite, also weit axial ausgedehnte Dimensionierung der nach radial innen greifenden Vorsprünge 88 und somit eine stabile Anschlagwechselwirkung mit den Radialvorsprüngen 72 der Kupplungsnabe 14. Das Zwischenelement 32 ist als ein einziges, integrales Bauteil bereitgestellt und wirkt sowohl für die erste Dämpferstufe, als auch die zweite Dämpferstufe.

Die zum Aufbau des Eingangsbereichs 26 der zweiten Dämpferstufe 22 eingesetzten Käfigelemente 98, 100 sind vorzugsweise aus Kunststoffmaterial hergestellt und durch den vermittels der Axialvorsprünge generierten Formschluss in einfacher Weise zur gemeinsamen Drehung gekoppelt. In entsprechend einfacher Weise kann durch die Axialvorsprünge 102 eine definierte und einfache Formschlusskopplung zum Zentralscheibenelement 56 hergestellt werden. In den in den Käfigelementen 98, 100 gebildeten Aussparungen 108, 110 können die Dämpferelemente 46 der zweiten Dämpferstufe 22 aufgenommen und insbesondere auch nach radial außen hin abgestützt werden. Auch können die Dämpferelemente 46 an einer oder beiden axialen Seiten übergriffen werden, wodurch auch eine axiale Ausweichbewegung vermieden ist. In ihrem die Dämpferelemente 46 aufnehmenden Bereich sind die beiden Käfigelemente 98, 100 in Abstand zueinander positioniert, so dass der nach radial außen greifende, stegartige Bereich des Zwischenelements 32, welcher im Wesentlichen den Ausgangsbereich 34 der zweiten Dämpferstufe 22 bereitstellt, dort aufgenommen werden kann.

Die Dämpferelemente 46 können in den Aussparungen 108, 110 unter Vorspannung aufgenommen werden, so dass eine Mindestkraft bzw. ein Mindestmoment erforderlich ist, um die zweite Dämpferstufe 22 in ihrem elastisch wirksamen Bereich betreiben zu können. Auch die Käfigelemente 98, 100 sind durch Wechselwirkung mit dem Deckscheibenelement 50 einerseits und dem Zwischenelement 32 bzw. dem Vorspannelement 148 andererseits als Reibpartner in der Reibformation 120 wirksam. Da weiterhin die Dämpferelemente 46 der zweiten Dämpferstufe 22 an den beiden Käfigelementen 98, 100 axial beidseits ihrer Abstützung bezüglich des Zwischenelements 32 abgestützt sind, wird es möglich, in jeder Relativdrehrichtung die Dämpferelemente 46 symmetrisch zu belasten, so dass eine Ausweichbewegung insbesondere in axialer Richtung vermieden wird.

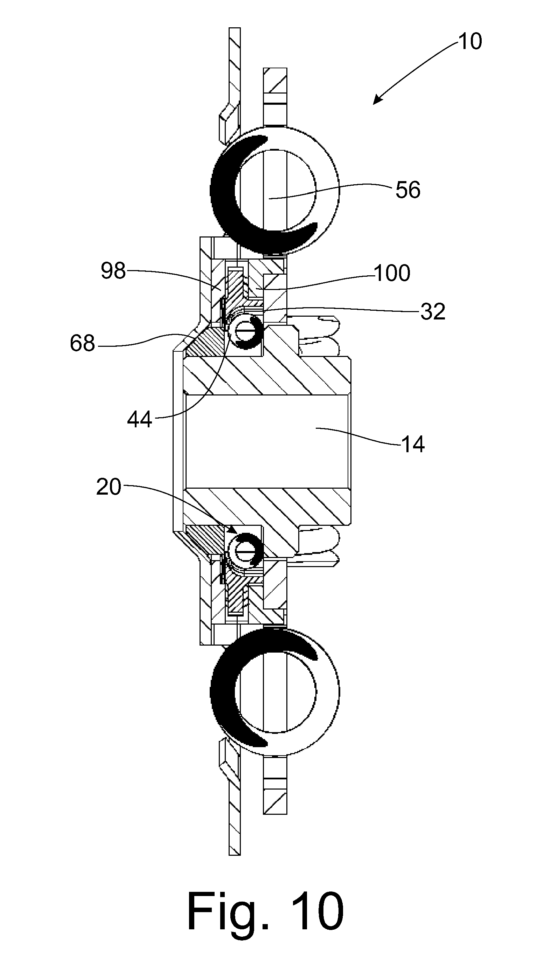

An dem vorangehend beschriebenen Aufbau können, wie nachfolgend auch mit Bezug auf die Fig. 10 dargelegt, selbstverständlich verschiedene Änderungen vorgenommen werden. So kann beispielsweise, wie ein Vergleich der Fig. 10 mit den Fig. 1 und 2 dies zeigt, das Käfigelement 98 nach radial hin kürzer gebaut sein. Der Lagerring 68 könnte in Reibschlusskopplung mit der Kupplungsnabe 14 eingesetzt sein, so dass abhängig von den Flächenbelastungen eine zusätzliche oder alternative Reibstelle auch zwischen dem Lagerring 68 und dessen axialer Abstützung an der Kupplungsnabe 14 entstehen kann. Weiterhin kann in diesem radialen Bereich das Zwischenelement 32 so gestaltet sein, dass es die Dämpferelemente 44 der ersten Dämpferstufe 20 nach radial innen hin insbesondere an der vom Zentralscheibenelement 56 axial entfernt liegenden Seite weiter übergreift, um somit eine käfigartige Umhausung für die Dämpferelemente 44 in demjenigen Bereich zu bilden, in welchem sie nach radial außen über die Kopplungsnabe 14 hervor stehen. Der nach radial außen greifende stegartige Bereich des Zwischenelements 32, welcher auch zur Abstützung der Dämpferelemente 46 der zweiten Dämpferstufe 22 dient, kann zusätzlich auch als Reibpartner dienen, beispielsweise durch Reibwechselwirkung mit einem der Käfigelemente 98, 100, ggf. unter Zwischenlagerung eines reibvermittelnden Bauteils. Das Zwischenelement 32 kann insbesondere dann, wenn es einer stärkeren Reibbelastung unterworfen sein soll, auch aus Metallmaterial aufgebaut sein. Vorteilhafterweise kann hier gesintertes Material eingesetzt werden.

Um in den einzelnen oder zumindest einer der Dämpferstufen 20, 22 eine weitere Abstufung der Wirkungsweise zu erlangen, können die Aussparungen zur Aufnahme der Dämpferelemente 44 oder/und die Aussparungen zur Aufnahme der Dämpferelemente 46 in den jeweiligen Dämpferstufen unterschiedlich gestaltet sein, so dass bei Relativverdrehung des jeweiligen Eingangsbereichs bezüglich des jeweiligen Ausgangsbereichs zunächst nur eines oder ein Teil der Dämpferelemente 44 oder/und 46 wirksam wird und nach vorgegebenem Drehweg dann weitere Dämpferelemente oder ein weiteres Dämpferelement 44 oder/und 46 wirksam wird.

Um abhängig vom Relativdrehwinkel oder Relativdrehweg die Reibwirkung verändern zu können, können die reibend miteinander in Wechselwirkung tretenden Reibflächen zumindest teilweise rampenartig ausgebildet sein, so dass mit zunehmender Relativdrehung eine erhöhte Flächenpressung entsteht. Auch dort, wo ein Vorspannelement sich abstützt, kann durch eine derartige rampenartige Ausgestaltung eine mit dem Relativdrehwinkel zunehmende Anpresskraft und dementsprechend auch ein erhöhtes Reibmoment erzeugt werden.

Die Haltevorsprünge 96 an dem Zwischenelement 32 können eine allgemein dreieckartige Konfiguration aufweisen, wodurch eine Einführschräge für die Dämpferelemente 46 entsteht, was insbesondere bei Ausgestaltung derselben als Schraubenfedern vorteilhaft für eine vereinfachte Montage ist. Diese Haltevorsprünge 96 können über die gesamte axiale Breite des Zwischenelements in demjenigen Bereich, in welchem es die Umfangsabstützbereiche bereitstellt, ausgebildet sein und eine derartige maximale Radialabmessung aufweisen, dass sie noch in den Innendurchmesser der Halteelemente eingreifen können. Die Vorsprungshöhe entspricht vorteilhafterweise dem ein- bis dreifachen des Durchmessers des zum Aufbau der Dämpferelemente 46 eingesetzten Drahtes. Um eine zuverlässige Abstützwechselwirkung für die Dämpferelemente 46 gewährleisten zu können sollte der Winkel zwischen einem jeweiligen Umfangsabstützbereich des Zwischenelements 32 und einer inneren Kante eines jeweiligen Haltevorsprungs 96 vorteilhafterweise im Bereich zwischen 55° und 80° liegen.

Auch bei dem Eingangsbereich 26 der zweiten Federstufe 22, also den beiden Käfigelementen 98, 100, sind verschiedene Variationen möglich. So kann eines davon oder können beide aus Metallmaterial hergestellt sein. Auch hier kann die Umfangslänge der jeweils zusammen einen Aufnahmeraum für die Dämpferelemente 46 bildenden Aussparungen 108, 110 variieren, um Dämpferelemente unterschiedlicher Länge aufnehmen zu können bzw. eine verzögerte Wirksamkeit erreichen zu können. Ein Vorspannelement, welches die Erzeugung einer Reibwirkung für die zweite Dämpferstufe 22 gewährleistet, kann sich, wie in den Figuren dargestellt, an einem der Käfigelemente abstützen. Auch ein Vorspannelement, welches die Erzeugung einer Vorspannkraft für die erste Dämpferstufe 20 gewährleistet, kann sich an einem der Käfigelemente abstützen, ebenso wie ein für eine versetzte Reibwirkung sorgendes Vorspannelement. Auch ist es denkbar, die Kupplungsnabe 14 insbesondere im Bereich der Verzahnung 112 so weit nach radial außen zu verlängern, dass eine gegenseitige axiale Abstützung insbesondere mit dem Käfigelement 100 erreicht werden kann und somit eine axiale Sicherung für den Eingangsbereich 26 erzielt wird. In diesem Falle kann insbesondere auch eine Reibwechselwirkung zwischen dem Eingangsbereich 26 und der Kupplungsnabe 14 erreicht werden, welche dann im Wirkungsbereich der ersten Dämpferstufe 20 wirksam ist.

Um weiter dafür sorgen zu können, dass der Eingangsbereich 26 und das Zentralscheibenelement 56 in einer definierten Relativdrehposition bezüglich einander drehfest gehaltert werden können, können die Axialvorsprünge 102 des Käfigelements 100 zueinander unterschiedlich ausgebildet sein, wobei dann in dem Zentralscheibenelement 56 entsprechend unterschiedlich gestaltete Aufnahmeaussparungen eine definierte Relativpositionierung in nur einer oder einer Mehrzahl von gewünschten Einbaulagen gewährleisten. Ferner kann selbstverständlich das Käfigelement 100 zusätzlich zu den Axialvorsprüngen 102 auch diejenigen Axialvorsprünge aufweisen, die zur drehfesten Verbindung mit dem anderen Käfigelement 98 dienen. Sofern die Käfigelemente nicht aus Metallmaterial hergestellt sind, ist es vorteilhaft, das Käfigelement 100, also das mit dem Zentralscheibenelement 56 zusammenwirkende Käfigelement, aus thermoplastischem Material mit hoher Festigkeit auszuführen. Das Käfigelement 98 kann gleichermaßen aus thermoplastischem Material oder duroplastischem Material mit hoher Temperaturbeständigkeit ausgeführt sein. Grundsätzlich ist es weiterhin möglich, die beiden Käfigelemente 98, 100, also den Eingangsbereich 26 der zweiten Dämpferstufe 22, nicht durch die Axialvorsprünge 102, sondern unter Zwischeneingliederung einer weiteren Dämpferstufe an das Zentralscheibenelement 56, also den zweiten Ausgangsbereich 54, anzubinden. Hierzu könnten im radial inneren Bereich des Zentralscheibenelements 56 und in zumindest einem der Käfigelemente Aussparungen mit Umfangsabstützbereichen für Dämpferelemente, also beispielsweise Dämpferfedern, einer derartigen dritten Stufe vorgesehen sein.

Das Zentralscheibenelement 56 kann in seiner Wechselwirkung mit der Kupplungsnabe 14 so gestaltet sein, dass der im Bereich der Verzahnungen 112, 116 bestehende zweite Freiwinkel W₂ vergleichsweise klein ist, also nur geringfügig größer als der erste Freiwinkel W₁, welcher durch die Wechselwirkung des Zwischenelements 32 mit der Kupplungsnabe 14 vorgesehen ist. Auf diese Art und Weise kann gewährleistet werden, dass bereits bei vergleichsweise geringen Drehmomenten auch die zweite Dämpferstufe 22 nicht mehr elastisch wirksam sein kann, um insbesondere im Lastwechselzustand auftretende Schwingungen durch die Dämpferelemente 60 des zweiten Dämpferbereichs 18 auffangen zu können.

In den beiden Dämpferstufen 20, 22 des ersten Dämpferbereichs 16 können auch über einen größeren Winkelbereich ausgedehnte Dämpferelemente 44 bzw. 46, also beispielsweise Schraubenfedern, eingesetzt werden, die beispielsweise eine Umfangserstreckung von über 60° aufweisen können. Somit ist es auch möglich, in diesen Dämpferstufen größere Relativverdrehwinkel zu gewährleisten. Wie bereits ausgeführt, können die Dämpferelemente selbstverständlich auch aus beispielsweise blockartig gestaltetem Kunststoffmaterial aufgebaut sein. Die Anzahl der Dämpferelemente 44 der ersten Dämpferstufe 20 kann beispielsweise 2, 3 oder 4 sein. Die Anzahl der Dämpferelemente 46 der zweiten Dämpferstufe 22 ist vorteilhafterweise ein ganzzahliges vielfaches der Anzahl an Dämpferelementen 44 der ersten Dämpferstufe 20. Entsprechendes gilt auch für die Anzahl der Dämpferelemente 60 des zweiten Dämpferbereichs 18.

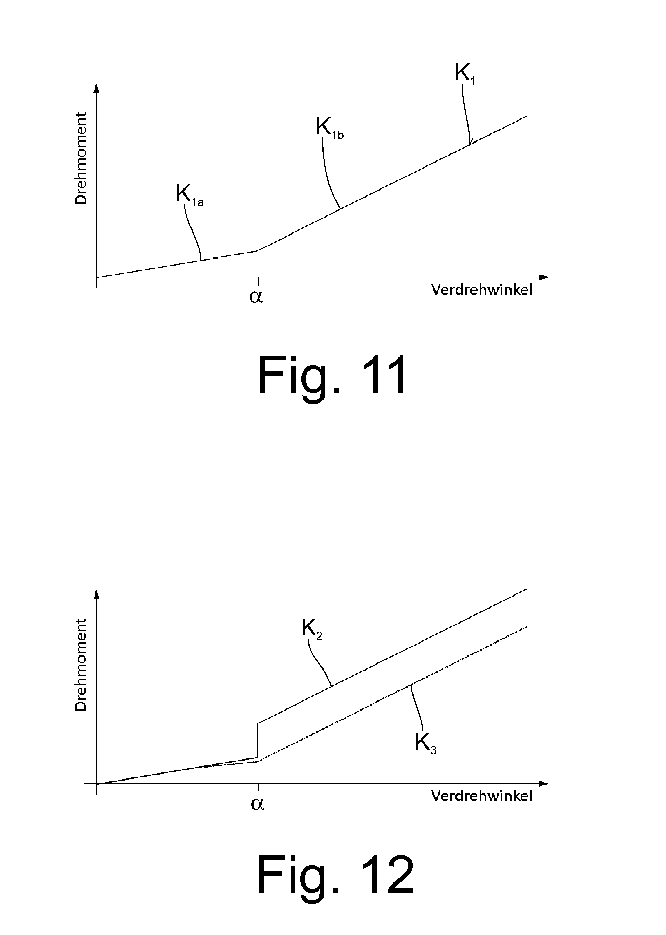

Die Fig. 11 zeigt eine Dämpferkennlinie K₁, also das über dem Relativdrehwinkel aufgetragene zur Erlangung eines jeweiligen Relativdrehwinkels erforderliche Drehmoment, für den ersten Dämpferbereich 16. Zu erkennen ist, dass bis zu einem Grenzdrehwinkel α in einem Kennlinienast K₁ₐ eine vergleichsweise weiche Kennung im elastischen Wirkungsbereich der ersten Dämpferstufe 20 vorliegt. Bei Erreichen des Grenzwinkels α wird eine weitere Drehung des Zwischenelements 32 bezüglich der Kupplungsnabe 14 verhindert und es ist dann in einem Kennlinienast K_{1b} die zweite Dämpferstufe 22 mit höherer Steifigkeit wirksam.

Die Fig. 12 zeigt zwei weitere Beispiele für Kennlinien K₂ und K₃. Im Fall der Kennlinie K₂ sind die Dämpferelemente 46 oder einige der Dämpferelemente 46 der zweiten Dämpferstufe 22 vorgespannt eingebaut, so dass bei Erreichen des Grenzwinkels α ein sprunghafter Anstieg in der Kennlinie und somit des zur Weiterdrehung erforderlichen Drehmoments auftritt. Im Falle der Kennlinie K₃ sind die Dämpferelemente 46 der zweiten Dämpferstufe so ausgelegt bzw. auch unter Vorspannung eingebaut, dass bereits vor Erreichen des Grenzdrehwinkels α die Dämpferelemente 46 komprimiert werden können, was zunächst zu einer geringeren Steifigkeit führt. Bei Erreichen des Grenzdrehwinkels α ist dann nur noch die zweite Dämpferstufe mit der durch ihre Dämpferelemente 46 vorgegebenen Steifigkeit wirksam.

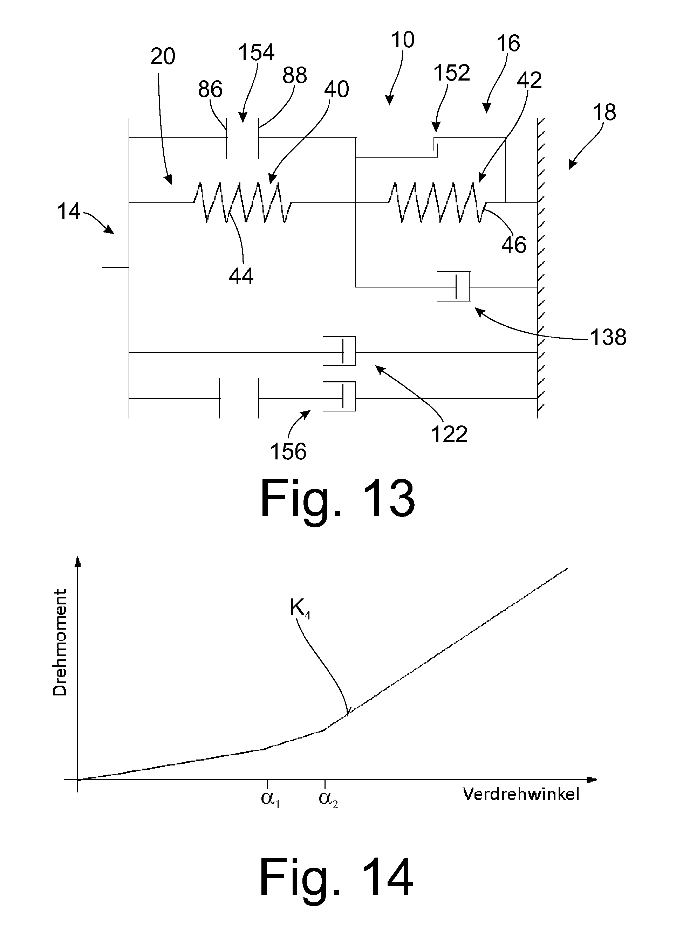

Die Fig. 13 zeigt schaltbildartig den Aufbau einer derartigen Torsionsschwingungsdämpferanordnung 10 bzw. des ersten Dämpferbereichs 16 derselben, welcher im Wesentlichen zwischen der Kupplungsnabe 14 und dem zweiten Dämpferbereich 18 wirksam ist. Zu erkennen sind die Dämpferelemente 44 bzw. 46 der Dämpferelementeneinheiten 40, 42, wobei bei 152 der vorgespannte Einbau der Dämpferelemente 46 symbolisiert ist. Bei 154 ist die durch die Aussparungen 86 und die Radialvorsprünge 88 realisierte Drehwinkelbegrenzung für die erste Dämpferstufe 20 symbolisiert. Zu erkennen sind auch der erste Reibbereich 122 bzw. der dritte Reibbereich 138. Zusätzlich könnte, wie bei 156 angedeutet, ein versetzt wirksamer Reibbereich zwischen der Kupplungsnabe 14 und dem zweiten Dämpferbereich 18, also eine spielbehaftete Reibung vorgesehen sein.

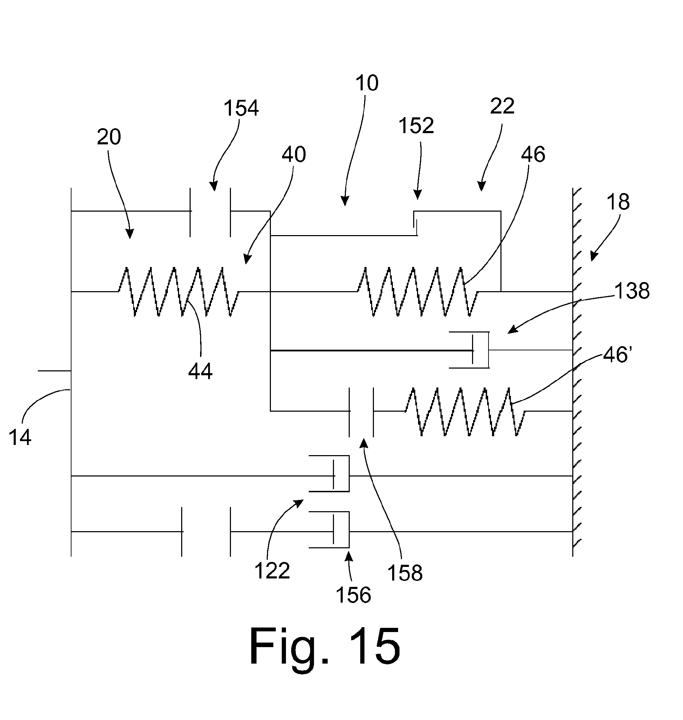

Die Fig. 14 zeigt eine weitere Dämpferkennlinie K₄ für den ersten Dämpferbereich 16 mit zweifachem Übergang jeweils zu einer erhöhten Steifigkeit mit zunehmendem Relativdrehwinkel bei jeweiligen Grenzwinkeln α₁und α₂. Der Grenzwinkel α₁ symbolisiert wieder das Ende der elastischen Wirksamkeit der ersten Dämpferstufe 20 und den Beginn der elastischen Wirksamkeit der zweiten Dämpferstufe 22. Diese ist, so wie vorangehend bereits dargelegt, mit einer Abstufung der Wirksamkeit ihrer Dämpferelemente 46 aufgebaut, so dass zunächst nur ein Teil, beispielsweise zwei der vier Dämpferelemente 46, wirksam ist und bei Erreichen des zweiten Grenzwinkels α₂ auch die verbleibenden Dämpferelemente 46' (siehe Fig. 15) wirksam werden.

Ein schaltbildartig dargestellter Aufbau einer derartigen Ausgestaltung ist in Fig. 15 gezeigt. Man erkennt bei der zweiten Dämpferstufe 22 die beispielsweise unter Vorspannung eingebauten und bei Erreichen des ersten Grenzdrehwinkels α₁ wirksam werdenden Dämpferelemente 46 und man erkennt die in Umfangsrichtung bei 158 frei gestellten Dämpferelemente 46'. Diese Freistellung kann dadurch erreicht werden, dass die Dämpferelemente 46' kürzer sind als die mit diesen zusammenwirkenden Umfangsabstützbereiche des Zwischenelements 32 oder/und der Käfigelemente 98, 100.

Es sei darauf hingewiesen, dass eine derart gestufte Wirksamkeit selbstverständlich auch bei der ersten Dämpferstufe 20 oder/und im zweiten Dämpferbereich 18 realisiert sein kann.

Es ist abschließend darauf hinzuweisen, dass die Prinzipien der vorliegenden Erfindung selbstverständlich auch dann Anwendung finden, wenn der erste Dämpferbereich mit mehr als zwei Dämpferstufen aufgebaut ist. Auch dann ist es besonders vorteilhaft, dafür zu sorgen, dass immer dann, wenn irgendeine dieser Dämpferstufen im Bereich ihrer Elastizität arbeitet, dies durch die Erzeugung einer Reibkraft begleitet ist, also kein Totgang oder Relativdrehwinkel ohne Erzeugung einer Reibkraft vorhanden ist. Entsprechendes gilt selbstverständlich auch für den zweiten Dämpferbereich. Auch hier kann, wie insbesondere durch die Reibformation mit ihrem ersten Reibbereich realisiert, dafür gesorgt sein, dass immer dann, wenn der zweite Dämpferbereich im Bereich seiner Elastizität arbeitet, eine Reibarbeit zur Schwingungsenergieabfuhr geleistet werden muss.

## Patentansprüche

1. Torsionsschwingungsdämpferanordnung, insbesondere in einer Kupplungsscheibe, umfassend:
- einen in einem Bereich niedrigerer zu übertragender Drehmomente elastisch wirksamen ersten Dämpferbereich (16) mit einem ersten Eingangsbereich (24) und einem gegen die Wirkung einer ersten Dämpferelementenanordnung (38) um eine Drehachse (A) bezüglich des ersten Eingangsbereichs (24) drehbaren ersten Ausgangsbereich (28),
- einen im Bereich höherer zu übertragender Drehmomente elastisch wirksamen zweiten Dämpferbereich (18) mit einem zweiten Eingangsbereich (48) und einem gegen die Wirkung einer zweiten Dämpferelementenanordnung (58) um die Drehachse (A) bezüglich des zweiten Eingangsbereichs (48) drehbaren zweiten Ausgangsbereich (54),
- wobei der erste Dämpferbereich (16) eine erste Dämpferstufe (20) und eine zweite Dämpferstufe (22) umfasst, wobei die erste Dämpferstufe (20) bis zu niedrigeren Drehmomenten elastisch wirksam ist, als die zweite Dämpferstufe (22),
- wobei die erste Dämpferstufe (20) einen Eingangsbereich (36) und einen gegen die Wirkung einer ersten Dämpferelementeneinheit (40) der ersten Dämpferelementenanordnung (38) um die Drehachse (A) bezüglich ihres Eingangsbereichs (36) drehbaren Ausgangsbereich (30) umfasst,
- wobei die zweite Dämpferstufe (22) einen Eingangsbereich (26) und einen gegen die Wirkung einer zweiten Dämpferelementeneinheit (42) der ersten Dämpferelementenanordnung (38) um die Drehachse (A) bezüglich ihres Eingangsbereichs (26) drehbaren Ausgangsbereich (34) umfasst,
- eine Reibformation (120) zur Erzeugung einer Reibkraft wenigstens immer dann, wenn der Eingangsbereich (36) der ersten Dämpferstufe (20) sich bezüglich des Ausgangsbereichs (30) der ersten Dämpferstufe (20) um die Drehachse (A) dreht und wenn der Eingangsbereich (26) der zweiten Dämpferstufe (22) sich bezüglich des Ausgangsbereichs (34) der zweiten Dämpferstufe (22) um die Drehachse (A) dreht.

2. Torsionsschwingungsdämpferanordnung nach Anspruch1, **dadurch gekennzeichnet, dass** der Eingangsbereich(26) der zweiten Dämpferstufe (22) mit dem zweiten Ausgangsbereich (54) vorzugsweise im Wesentlichen ohne Drehbewegungsspiel gekoppelt ist.

3. Torsionsschwingungsdämpferanordnung nach Anspruch 1 oder 2, **dadurch gekennzeichnet, dass** der Ausgangsbereich (34) der zweiten Dämpferstufe (22) mit dem Eingangsbereich (36) der ersten Dämpferstufe (20) vorzugsweise im Wesentlichen ohne Drehbewegungsspiel gekoppelt ist.

4. Torsionsschwingungsdämpferanordnung nach einem der Ansprüche 1 bis 3, **dadurch gekennzeichnet, dass** ein Zwischenelement (32) den Ausgangsbereich (34) der zweiten Dämpferstufe (22) und den Eingangsbereich (36) der ersten Dämpferstufe (20) bereitstellt.

5. Torsionsschwingungsdämpferanordnung nach einem der Ansprüche 1 bis 4, **dadurch gekennzeichnet, dass** der Ausgangsbereich (34) der zweiten Dämpferstufe (22) bezüglich des Ausgangsbereichs (30) der ersten Dämpferstufe (20) in einem ersten Freiwinkelbereich (W₁) um die Drehachse (A) drehbar ist, dass der zweite Ausgangsbereich (54) bezüglich des Ausgangsbereichs (30) der ersten Dämpferstufe (20) in einem zweiten Freiwinkelbereich (W₂) drehbar ist und dass der zweite Freiwinkelbereich (W₂) größer ist, als der erste Freiwinkelbereich (W₁).

6. Torsionsschwingungsdämpferanordnung nach einem der Ansprüche 1 bis 5, **dadurch gekennzeichnet, dass** der Eingangsbereich (36) der ersten Dämpferstufe (20) Umfangsabstützbereiche (82, 84) für Dämpferelemente (44) der ersten Dämpferelementeneinheit (40) bereitstellt und dass der Ausgangsbereich (30) der ersten Dämpferstufe (20) Umfangsabstützbereiche (76, 78) für die Dämpferelemente (44) der ersten Dämpferelementeneinheit (40) bereitstellt, wobei die Umfangsabstützbereiche (82, 84) des Eingangsbereichs (36) der ersten Dämpferstufe (20) und die Umfangsabstützbereiche (76, 78) des Ausgangsbereichs (30) der ersten Dämpferstufe (20) zueinander radial gestaffelt liegen.

7. Torsionsschwingungsdämpferanordnung nach Anspruch 6, **dadurch gekennzeichnet, dass** die Dämpferelemente (44) der ersten Dämpferelementeneinheit (40) in ihrem radial äußeren Bereich an den Umfangsabstützbereichen (82, 84) des Eingangsbereichs (36) der ersten Dämpferstufe (20) abgestützt oder abstützbar sind und in ihrem radial inneren Bereich an den Umfangsabstützbereichen (76, 78) des Ausgangsbereichs (30) der ersten Dämpferstufe (20) abgestützt oder abstützbar sind.

8. Torsionsschwingungsdämpferanordnung nach einem der Ansprüche 1 bis 7, **dadurch gekennzeichnet, dass** der Eingangsbereich (26) der zweiten Dämpferstufe (22) Umfangsabstützbereiche (109, 111) für Dämpferelemente (46) der zweiten Dämpferelementeneinheit (42) bereitstellt und dass der Ausgangsbereich (34) der zweiten Dämpferstufe (22) Umfangsabstützbereiche (92, 94) für die Dämpferelemente (46) der zweiten Dämpferelementeneinheit (42) bereitstellt, wobei die Umfangsabstützbereiche (1109, 111) des Eingangsbereichs (26) der zweiten Dämpferstufe (22) und die Umfangsabstützbereiche (92, 94) des Ausgangsbereichs (34) der zweiten Dämpferstufe (22) zueinander axial gestaffelt liegen.

9. Torsionsschwingungsdämpferanordnung nach Anspruch 8, **dadurch gekennzeichnet, dass** die Dämpferelemente (46) der zweiten Dämpferelementeneinheit (42) in ihrem axial mittleren Bereich an den Umfangsabstützbereichen (92, 94) des Eingangsbereichs oder des Ausgangsbereichs der zweiten Dämpferstufe, vorzugsweise des Ausgangsbereichs (34) der zweiten Dämpferstufe (22), abgestützt oder abstützbar sind und axial beidseits des axial mittleren Bereichs an den Umfangsabstützbereichen (109, 111) des Ausgangsbereichs oder des Eingangsbereichs der zweiten Dämpferstufe, vorzugsweise des Eingangsbereichs (26) der zweiten Dämpferstufe (22), abgestützt oder abstützbar sind.

10. Torsionsschwingungsdämpferanordnung nach einem der Ansprüche 1 bis 9, **dadurch gekennzeichnet, dass** die erste Dämpferstufe (20) radial innerhalb der zweiten Dämpferstufe (22) angeordnet ist oder/und dass die erste Dämpferstufe (20) und die zweite Dämpferstufe (22) im Wesentlichen im gleichen Axialbereich angeordnet sind.

11. Torsionsschwingungsdämpferanordnung nach einem der Ansprüche 1 bis 10, **dadurch gekennzeichnet, dass** der erste Dämpferbereich (16) an einer axialen Seite des zweiten Ausgangsbereichs (54) angeordnet ist.

12. Torsionsschwingungsdämpferanordnung nach einem der Ansprüche 1 bis 11, **dadurch gekennzeichnet, dass** der zweite Eingangsbereich (48) zwei in axialem Abstand zueinander angeordnete und miteinander fest verbundene Deckscheibenelemente (50, 52) umfasst und dass der zweite Ausgangsbereich (54) ein axial zwischen die Deckscheibenelemente (50, 52) eingreifendes Zentralscheibenelement (56) umfasst.

13. Torsionsschwingungsdämpferanordnung nach einem der Ansprüche 1 bis 12, **dadurch gekennzeichnet, dass** der Eingangsbereich (26) der zweiten Dämpferstufe (22) zwei axial nebeneinander liegende, miteinander wenigstens drehfest verbundene und Umfangsabstützbereiche (109, 111) für Dämpferelemente (46) der zweiten Dämpferelementeneinheit (42) bereitstellende Käfigelemente (98, 100) umfasst und dass der Ausgangsbereich (34) der zweiten Dämpferstufe (22) ein axial zwischen die Käfigelemente (98, 100) eingreifendes und Umfangsabstützbereiche (92, 94) für die Dämpferelemente (46) der zweiten Dämpferelementeneinheit (42) bereitstellendes Zwischenelement (32) umfasst.

14. Torsionsschwingungsdämpferanordnung nach einem der Ansprüche 1 bis 13, **dadurch gekennzeichnet, dass** der Ausgangsbereich (30) der ersten Dämpferstufe (20) eine Nabe (14) umfasst.

15. Torsionsschwingungsdämpferanordnung nach einem der Ansprüche 1 bis 14, **dadurch gekennzeichnet, dass** die erste Dämpferstufe (20) und die zweite Dämpferstufe (22) in einander nicht vollständig überlappenden Bereichen der zu übertragenden Drehmomente elastisch wirksam sind.

16. Torsionsschwingungsdämpferanordnung nach einem der Ansprüche 1 bis 15, **dadurch gekennzeichnet, dass** die Reibformation (120) einen zwischen dem zweiten Eingangsbereich (48) und dem Ausgangsbereich (30) der ersten Dämpferstufe (20) wirksamen ersten Reibbereich (122) mit wenigstens einer bezüglich des zweiten Eingangsbereichs (48) drehfesten Reibfläche (124) und wenigstens einer bezüglich des Ausgangsbereichs (30) der ersten Dämpferstufe (20) drehfesten Reibfläche (126) umfasst.

17. Torsionsschwingungsdämpferanordnung nach einem der Ansprüche 1 bis 16, **dadurch gekennzeichnet, dass** die Reibformation (120) einen zwischen dem zweiten Eingangsbereich (48) und dem Eingangsbereich (26) der zweiten Dämpferstufe (22) wirksamen zweiten Reibbereich (132) mit wenigstens einer bezüglich des zweiten Eingangsbereichs (48) drehfesten Reibfläche (134) und wenigstens einer bezüglich des Eingangsbereichs (26) der zweiten Dämpferstufe (22) drehfesten Reibfläche (136) umfasst.

18. Torsionsschwingungsdämpferanordnung nach einem der Ansprüche 1 bis 17, **dadurch gekennzeichnet, dass** die Reibformation (120) einen zwischen dem Eingangsbereich (26) der zweiten Dämpferstufe (22) oder/und dem zweiten Ausgangsbereich (54) und dem Ausgangsbereich (34) der zweiten Dämpferstufe (22) oder/und dem Eingangsbereich (36) der ersten Dämpferstufe (20) wirksamen dritten Reibbereich (138) mit wenigstens einer bezüglich des Eingangsbereichs (26) der zweiten Dämpferstufe (22) oder/und des zweiten Ausgangsbereichs (54) drehfesten Reibfläche (140, 142) und wenigstens einer bezüglich des Ausgangsbereichs (34) der zweiten Dämpferstufe (22) oder/und des Eingangsbereichs (36) der ersten Dämpferstufe (20) drehfesten Reibfläche (146, 150) umfasst.

19. Kupplungsscheibe, umfassend eine Torsionsschwingungsdämpferanordnung (10) nach einem der vorangehenden Ansprüche.

20. Kupplungsscheibe nach Anspruch 19, **dadurch gekennzeichnet, dass** am zweiten Eingangsbereich (48) Kupplungsreibbeläge (12) vorgesehen sind und dass der Ausgangsbereich (30) der ersten Dämpferstufe (20) eine Kupplungsnabe (14) umfasst.
